**Europäisches Patentamt**

**European Patent Office**

**Office européen des brevets**

(11) Veröffentlichungsnummer: **0 070 870**
**B1**

## EUROPÄISCHE PATENTSCHRIFT

(45) Veröffentlichungstag der Patentschrift:
26.02.86

(21) Anmeldenummer: **82900543.8**

(22) Anmeldetag: **10.02.82**

(86) Internationale Anmeldenummer:
**PCT/EP 82/00024**

(87) Internationale Veröffentlichungsnummer:
**WO 82/02680 (19.08.82 Gazette 82/20)**

(51) Int. Cl.⁴: **B 05 C 15/00, B 01 D 46/12**

(54) **EINRICHTUNG ZUM ABSAUGEN VON FARBNEBELN.**

(30) Priorität: **12.02.81 DE 3104956**

(43) Veröffentlichungstag der Anmeldung:
**09.02.83 Patentblatt 83/6**

(45) Bekanntmachung des Hinweises auf die Patenterteilung:
**26.02.86 Patentblatt 86/9**

(84) Benannte Vertragsstaaten:
**AT BE CH FR GB LI LU NL SE**

(56) Entgegenhaltungen:
**DE - A - 1 033 113
DE - A - 1 951 361
DE - A - 2 555 084
DE - A - 2 730 925
GB - A - 873 152
US - A - 4 236 902**

(73) Patentinhaber: **BERKMANN & SOHN,
INDUSTRIEANLAGEN, Inselstrasse 5, A-6900 Bregenz
(AT)**

(72) Erfinder: **BERKMANN, Eugen, Backenreuterstrasse 22,
A-6912 Hörbranz (AT)**
Erfinder: **BRUNNER, Herbert, Schwedenberg 7,
A-6900 Bregenz (AT)**

(74) Vertreter: **Riebling, Günter, Dr. et al, Patentanwälte
Dr.-Ing., Dipl.-Ing., Ing.(grad) Günter Riebling Dr.-Ing.,
Dipl.-Ing. Peter Riebling Rennerle 10 Postfach 3160,
D-8990 Lindau (Bodensee) (DE)**

# 0 070 870

## Beschreibung

Die Erfindung betrifft ein Gerät zum Absaugen von Farbnebeln und lacklösenden Dämpfen aus Farbspritzanlagen mit einem in einem Filtergehäuse angeordneten Filterteil, wobei das Filtergehäuse vorne, seitlich und oben geschlossen ist und mit seiner mindestens teilweise offenen Rückwand im Abstand vor einer Wand, sowie mit seiner mindestens teilweise offenen Bodenfläche im Abstand über dem Boden angeordnet ist, und die Luftansaugung durch das Filter durch den sich zwischen der Rückwand des Filtergehäuses und der Wand gebildeten Ansaugschacht, sowie zwischen dem sich zwischen dem Boden und der Bodenfläche des Filtergehäuses gebildeten Ansaugschacht erfolgt, und das die Luftansaugung bewirkende Gebläse an einer . Seitenwand des Filtergehäuses außen angeordnet ist und über eine die Seitenwand durchbrechende Ausnehmung einen Unterdruck im Filtergehäuse erzeugt.

Ein derartiges Gerät beschreibt die DE-A1-2 555 o84. Daraus ist das allgemeine Prinzip bekannt, einen derartigen Ansaugkasten aus einer durchbrochenen Wand einer Filteranlage und aus einer im Abstand dazu stehenden, natürlichen Wand zu bilden. Dort besteht aber der Nachteil, daß die Absaugvorrichtung hintere und untere Ansaugöffnungen für die mit Farbnebeln und lacklösenden Dämpfen verunreinigte Luft aufweist. Dadurch bedingt ist die Ansaugung also unsymmetrisch, so daß nur eine geringe Ansaugwirkung erreicht wird, weil die Farbnebel über Strömungshindernisse bildende Kanten des Gerätes angesaugt werden müssen und hierdurch umgelenkt werden. Es kommt hierbei zu Turbulenzen und entsprechenden Strömungsverlusten, so daß die Ansaugleistung insgesamt als ungenügend zu bezeichnen ist.

Weiterer Nachteil der bekannten Anordnung ist, daß der Ventilator, bestehend aus Motor und Gebläse, außerhalb des Ansaugkastens an einer Seite des Ansaugkastens angeordnet ist. Dadurch wird eine ungleichmässige Ansaugwirkung erzielt, weil in der Nähe der Ansaugöffnung des Gebläses ein wesentlich stärkerer Unterdruck an der Ansaugöffnung erzielt wird, als entfernt vom Ort des Gebläses. Die Filtermatten werden daher ungleichmässig mit dem Farbnebel beaufschlagt, nämlich in der Nähe der Ansaugstelle des Gebläses mehr, als entfernt davon, so daß die Standzeit dieses Filters nicht optimal ist.

Nachdem der Motor und das Gebläse außerhalb des Ansaugkastens angeordnet ist, werden diese Teile von den Farbnebeln beaufschlagt.

Hierdurch verschmutzt der Motor sehr stark. Eine solche Anordnung ist außerdem nicht für explosionsgefährdete Räume geeignet, so daß die insgesamte Anordnung gegen behördliche Unfallverhütungsvorschriften verstösst.

Durch die externe Anordnung von Motor und Gebläse ist außerdem ein großer Platzbedarf bedingt, vor allem durch den axialen Anbau des Motors an das Gebläse, wodurch die Baulänge des Gerätes sehr stark vergrößert ist.

Durch die außenliegende Anordnung an der Seitenwand des Filtergehäuses mit einem außenliegenden Motor ist der Nachteil verbunden, daß explosive Dämpfe in das Motorgehäuse gelangen können und dort zu einer Zerstörung des Motors sowie zu einer Gefährdung des Bedienungspersonals führen können.

Darüber hinaus ist das seitlich, offen angesetzte, Gebläseteil stark der Verschmutzung ausgesetzt. Die Reinigungsleistung eines bekannten Gerätes ist darüber hinaus nur umständlich unterschiedlichen Gegebenheiten anzupassen, denn es ist nicht möglich, die Filterfläche auf einfache Weise zu vergrößern.

Die vorliegende Erfindung hat sich daher, ausgehend von einem Gerät nach der DE-A1 555 084, die Aufgabe gestellt, ein solches Gerät so weiterzubilden, daß es in explosionsgefährdeten Räumen eingesetzt werden kann und daß darüber hinaus auch die Reinigungsleistung in großen Grenzen veränderbar ist.

Zur Lösung dieser Aufgabe ist die Erfindung dadurch gekennzeichnet, daß ein modularer Aufbau des Geräts dadurch erzielt ist, daß das Gebläse mit seinem Motor in einem gesonderten, geschlossenen Gehäuse angeordnet ist, welches ebenfalls von der Wand und über dem Boden aufgestellt ist, und daß an die gegenüberliegende Seitenwand des Gebläsegehäuses ein gleiches, jedoch spiegelbildlich ausgestaltetes, Filtergehäuse ansetzbar ist.

Wesentliches Merkmal der vorliegenden Erfindung ist der modulare Aufbau des Gerätes, der sich daraus ergibt, daß das gesamte Gebläse in einem gesonderten Gehäuse untergebracht ist und dieses Gehäuse seitlich an das Filtergehäuse angesetzt ist. Durch diesen modularen Aufbau werden mehrere Vorteile gleichzeitig erzielt. Zum einen kann das erfindungsgemässe Gerät nun in explosionsgefährdeten Räumen eingesetzt werden, weil das Innere des Gebläsegehäuses nur von gereinigten Dämpfen bestrichen wird, und nicht mehr - wie bei der DE-AI 2 555 084 - von ungereinigten, explosiven Dämpfen.

Der weitere Vorteil ist, daß durch den modularen Aufbau es nun möglich ist, auf ein weiteres, gleichartiges Filterteil an das Ventilatorgehäuse auf der anderen Seite anzusetzen, so daß die Reinigungsleistung eines erfindungsgemässen Gerätes verdoppelt werden kann.

Hingewiesen sei auch noch auf die DE-AI-1033 1 13, die den Ersatz einer feststehenden Wand durch ein entsprechendes Leitblech zeigt.

Schließlich sei noch verwiesen auf die DE-A1-1 951 361, die ein zick-zack-förmiges Filter beschreibt.

Abweichend von der Lehre der eingangs erwähnten DE-A1-2 555 084 wird es nach Anspruch 2 bevorzugt, wenn das Gehäuse des Gebläses ein unteres, geschlossenes Bodenblech aufweist, das einen größeren Abstand zum Boden aufweist, als ein parallel zum Boden und dicht über dem Boden angeordnetes Leitblech des Filtergehäuses. Damit ergibt sich der Vorteil, daß keine Gegenstände unter dem Gerät abgelegt werden können, die die bodenseitige öffnung des Geräts verschließen würden. Auch kann der Boden selbst frei von Verschmutzungen gehalten werden.

Weitere bevorzugte Ausgestaltungen der Erfindung ergeben sich aus den weiteren Unteransprüchen.

2

# 0 070 870

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1 Vorderansicht eines Geräts nach der Erfindung. mit zwei aneinandergereihten Ansaugkästen und Filterteilen; teilweiser Schnitt;

Fig. 2 Draufsicht auf die Anordnung nach Fig. 1 in Richtung des Pfeiles II;

Fig. 3 8eitenansicht der Anordnung nach den Fig. 1 und 2 in Richtung des Pfeiles III;

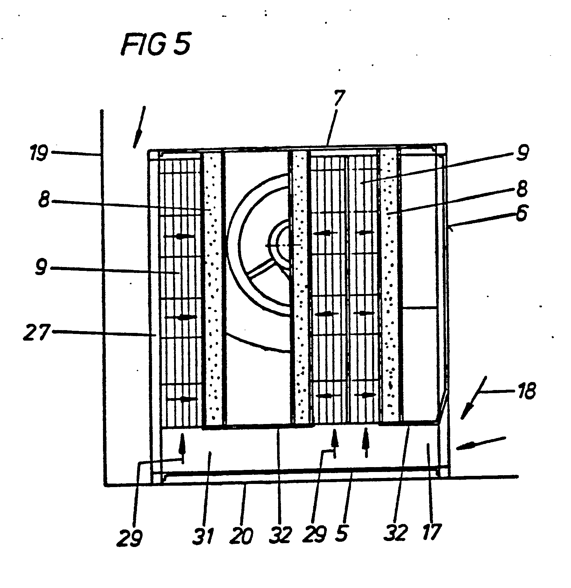

Fig. 4 Schnitt gemäss der Linie IV-IV in Fig. 2;

Fig. 5 Schnitt gemäss der Linie V-V in Fig. 2.

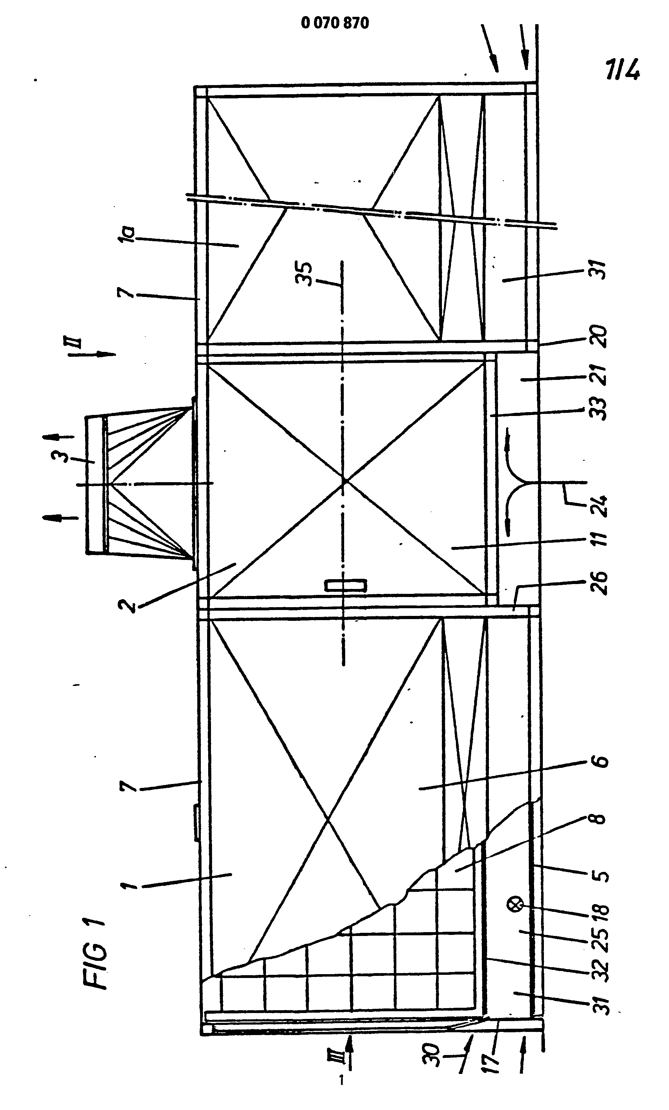

Nach Fig. 1 ist ein modularer Aufbau der gesamten Absaugvorrichtung dadurch gegeben, daß ein kastenförmiger Ventilatorteil 2 mit anreihbaren Filterteilen 1, 1 a kombiniert werden kann.

Der Ventilatorteil 2 besteht aus einer vorderen Revisionstür 11, bei deren Öffnung die Einzelteile des Ventilatorteils 2 zugänglich sind. An der Oberseite ist der Ventilatorteil 2 durch einen Ausblasstutzen 3 abgeschlossen, der den Übergang von einem viereckigen Querschnitt zu einem runden Quers chnitt bewerk ste lligt.

Der Ventilatorteil 2 ist gemäss Fig. 1 erhöht über dem Boden angebracht und ist durch ein unteres Bodenblech 33 zum Boden hin geschlossen, wodurch sich der Vorteil ergibt, daß auch zwischen dem Bodenblech 33 und dem Boden 2o der Aufstellungsfläche ein Ansaugschacht für das Filterteil 1 gebildet wird, der mit seitlichen Ansaugöffnungen 26 in den Ansaugkasten 31 des Filterteils 1 hineinführt.

In der folgenden Beschreibung wird lediglich das Filterteil 1 beschrieben, wobei die Beschreibung des Filterteils la identisch ist.

Die Luft strömt somit etwa in Pfeilrichtung 24 von der Seite und von unten her in die Ansaugöffnung 21 unterhalb des Ventilatorteils 2 ein, und verteilt sich dann in den Pfeilrichtungen 24 in Richtung. zu den Ansaugöffnungen 26 des Filterteils 1 und la.

Der Ansaugkasten 31 ist nach einer bevorzugten Ausführungsform allseitig mit seinen seitlichen, vertikalen Wänden geöffnet, so daß sich gemäss Fig. 1 eine vordere Ansaug-Öffnung 25 ergibt, bei der die Luft in Pfeilrichtung 18 angesaugt wird, eine linksseitige Ansaugöffnung 17, mit Luftansaugung in Pfeilrichtung 3o und eine rechtsseitig angeordnete Ansaugöffnung 26, bei der die Luft in Pfeilrichtung 24 angesaugt wird.

Nach einem weiteren Merkmal der Erfindung ist es vorgesehen, daß die horizontalen Kanten, welche die Ansaug-Öffnungen begrenzen, abgeschrägt sind, so daß die Luft ohne wesentliche Turbulenzen in den Ansaugkasten 31 unterhalb des Filterteils 1 eingesaugt wird, und hierdurch eine durchwegs laminare Strömung erreicht wird. Hieraus ergibt sich eine gute Absaugleistung.

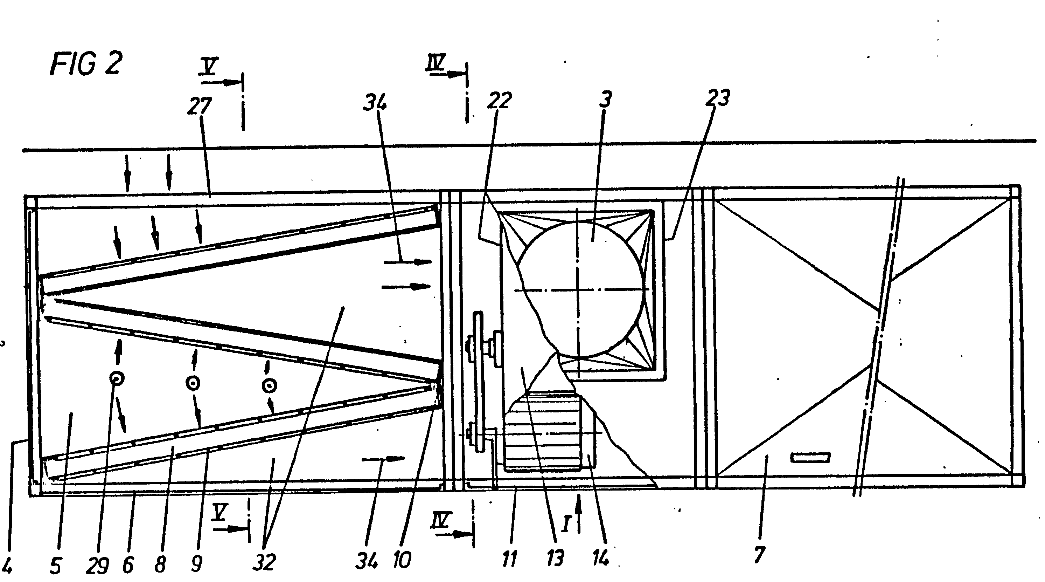

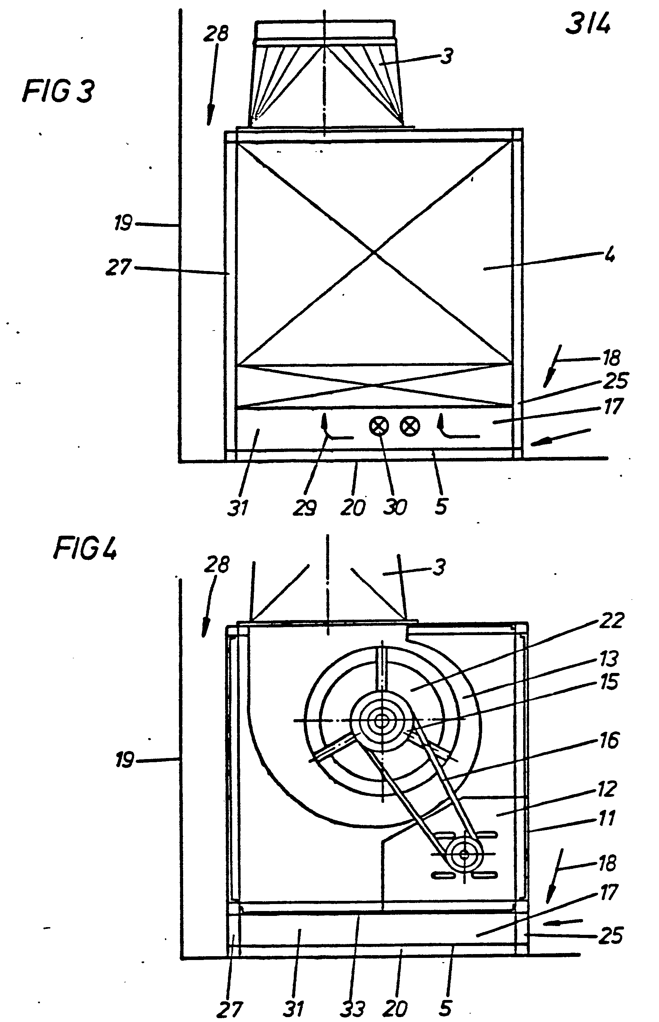

Aus Fig. 2 und 3 ist erkennbar, daß die Luft an der hinteren Ansaugöffnung 27 im Bereich des gesamten Filterteils 1 angesaugt wird.

Weiteres Merkmal nach Fig. 2 ist, daß sich die Filterflächen des V-förmig angeordneten Filters 8 in Richtung zur Ansaugöf fnung 22 des Ventilators 13 konisch verengen, so daß die Ansauggeschwindigkeit längs der Filterflächen bezüglich der Ansaugrichtung (Anordnung des Ventilators zum V-förmigen Filter) relativ gleich ist. Die Filterflächen werden damit annähernd gleichmässig mit Farbnebel beaufschlagt, wodurch die Standzeit wesentlich erhöht ist.

Es ergibt sich dadurch auch eine gleichmässige Ansaugleistung über der gesamten Länge der Ansaugöffnung 1 7, 25, 26. Hierdurch wird erreicht, daß bei den genannten Ansaugöf fnungen 17, 25 und 26 annähernd die gleiche Luftmenge angesaugt wird, was zur Vermeidung von Turbulenzen führt, eine laminare Strömung erzeugt und damit eine wesentlich bessere Absaugleistung erbringt.

Aus Fig. 2 ist erkennbar, daß das Bodenblech 32 des Filterteils 1 in Richtung zur Ansaugöffnung 22 des Ventilators geschlossen ist, so daß das untere Leitblech des Ansaugkastens 31 sichtbar ist. Gleichzeitig sind die Luftströmungen eingezeichnet.

Es ist ein seitliches Leitblech 4, ein unteres Leitblech 5 und ein vorderes Leitblech 6 und der obere Deckel 7 erkennbar.

Der Ventilator 13 saugt die Luft über eine Ansaugöffnung 22 in der eingezeichneten Pfeilrichtung 34 an. Der Ventilator ist in einer bevorzugten Ausführungsform ein zweiseitig saugender Radial-Ventilator, dessen Achse drehfest mit einer Riemenscheibe 1 5 verbunden ist, über die ein Treibriemen 16 gelegt ist, der auf die zugeordnete Antriebsscheibe des Motors 12 aufgelegt ist. Das Motorgehäuse 1 2 ist vollständig gekapselt, wodurch eine wesentliche Forderung erzielt ist, daß nämlich der Motor 14 nicht mit dem Farbnebel in Berührung kommt. Durch den Antrieb des Radial-Ventilators 13 über einen Treibriemen 16 ist es möglich, den Ventilator 13 mit dem Motor 14 untereinander anzuordnen, wodurch sich eine Platzersparnis ergibt. Weiterer Vorteil dieser Maßnahme ist, daß durch Wahl der Größe der Riemenscheibe 15 beliebige Drehzahlen des Ventilators gewählt werden können. Damit können beliebige Luftmengen gewählt werden, d.h. die Luftmenge ist einstellbar und den jeweiligen Verhältnissen anzupassen.

Ein weiteres Merkmal der Erfindung ist, nachdem der Ventilator 13 zweiseitig ansaugend ist, daß in Modular-

3

Bauweise gemäss Fig. 1 ein zweites Filterteil la links an den Ventilatorteil 2 angeordnet und angereiht werden kann, wobei das Filterteil la genau identisch, wie das Filterteil 1 aufgebaut ist.

Es ergibt sich hiermit eine stufenlose Anpassung an unterschiedliche Absaugverhältnisse, weil zum einen die Drehzahl der Luftgebläse eingestellt werden kann, und zum anderen bei höheren Absaugleistungen ein zweites Filterteil la in Modular-Bauweise angereiht werden kann.

Weiteres Merkmal ist aufgrund der gegebenen Luftführung und aufgrund der gegebenen, kastenförmigen Ausbildung der Filterteile, daß etwa in Höhe der Pfeile 34 zwischen dem zick-zack-förmigen Filter 8 und der Ansaugöffnung 22 des Ventilators 13 ein Aktiv-Kohle-Filter eingeschoben werden kann, wodurch hinsichtlich der Standzeit des Aktiv-Kohlefilters der wesentliche Vorteil besteht, daß die Farbnebel zunächst durch den Filter 8 grob abgeschieden werden. Dann wird vor den Aktiv-Kohle-Filter ein weiterer Fein-Filter geschaltet, der eine weitere Fein-Filterung durchführt; der Aktiv-Kohle-Filter scheidet dann die Lösungsmittel aus, so daß die Luft vollständig gereinigt den Ausblasstutzen 3 verlässt, und unmittelbar in den Raum wieder eingeführt werden kann. Bekannte Geräte verwenden hierzu entsprechende Aktiv-Kohle-Filter am Ausgang des Ausblasstutzens 3, was den Raumbedarf sehr stark erhöht, und das Gerät insgesamt raumgreifend gestaltet.

Nach der vorliegenden Erfindung ist im Gegensatz hierzu vorgesehen, daß der Filter unmittelbar im Filterteil 1 selbst integriert werden kann.

Durch Anordnung des gesamten Gerätes im Abstand vor einer Wand 19 wird im Bereich zur Wand 19 ein hinterer Ansaugschacht gebildet, wo die Luft dann großflächig in die hintere, großflächige und parallel zur Wand 19 angeordnete Ansaugöffnung 27 einströmt.

Der Zick-Zack-Filter 8 besteht aus Filtermatten, die in einem Stützgitter 9 gefasst sind, wobei das Stützgitter 9 in einem U-förmigen Filterrahmen 10 getragen wird.

Ein weiterer Vorteil der modularen Bauweise von Filterteil 1 und Ventilatorteil 2 ist, daß das Ventilatorteil 2 um eine Achse 35 gedreht werden kann, so daß der Ausblasstutzen 3 unmittelbar nach hinten zur Wand 19 zeigt, und durch einen Wanddurchbruch unmittelbar nach außen geführt werden kann. Die Ansaugöffnung und alle anderen. Verhältnisse ändern sich hierdurch nicht. Die Revisionstür 1 1 ist dann nach oben hin zu öffnen.

Der Filter 8 ist ein reiner Glasfaser-Filter und nicht brennbar. Der Ventilator ist explosionsgeschützt, ebenso ist der Motor explosionsgeschützt.

Der Motor besitzt einen Überhitzungsschutz, bestehend aus einem Kaltleiter und einem Abschaltschutz, so daß bei Überhitzung sofort der Motor abgeschaltet wird.

Durch die Anordnung des unteren, horizontal liegenden Ansaugkastens 31, dessen Seitenwände nach einer bevorzugten Ausführungsform allseitig geöffnet sind, wird der wesentliche Vorteil erzielt,.daß die- nach unten sich im Raum ablagernden Farbnebel besonders turbulenzarm erfasst werden. Es ergibt sich dadurch eine laminare Strömung, wodurch ein unbeabsichtigter Niederschlag der Farbnebeldämpfe in der Umgebung des Gerätes, insbesondere am Boden und an der Wand des Aufstellungsraumes verringert wird.

Hierdurch besteht der Vorteil, daß aufgrund des verringerten Niederschlags der Farbnebeldämpfe in der Umgebung des Gerätes diese Farbnebeldämpfe ihren Lösungsmittel-Anteil nicht ausscheiden können, und damit die entstehenden Lösungsmittelanteile praktisch vollständiq von der Absaugvorrichtung angesaugt werden.

Auf einen bestimmten Verschmutzungsgrad der Luft mit Farbnebel bezogen ergibt sich eine geringere, notwendige Absaugleistung. Die Absaugleistung kann um etwa 30% vermindert sein, verglichen mit anderen Konkurrenzgeräten, die mit einem ähnlichen Prinzip arbeiten.

**Patentansprüche**

1. Gerät zum Absaugen von Farbnebeln und lacklösenden Dämpfen aus Farbspritzanlagen mit einem in einem Filtergehäuse angeordneten Filterteil (1), wobei das Filtergehäuse vorne, seitlich und oben geschlossen ist und mit seiner mindestens teilweise offenen Rückwand im Abstand vor einer Wand (19), sowie mit seiner mindestens teilweise offenen Bodenfläche (33) im Abstand über dem Boden (20) angeordnet ist, und die Luftansaugung durch das Filter duch den sich zwischen der Rückwand des Filtergehäuses und der Wand (19) gebildeten Ansaugschacht, sowie zwischen dem sich zwischen dem Boden (20) und der Bodenfläche (33) des Filtergehäuses gebildeten Ansaugschacht erfolgt, und das die Luftansaugung bewirkende Gebläse (12-16) an einer Seitenwand des Filtergehäuses aussen angeordnet ist und über eine die Seitenwand durchbrechende Ausnehmung einen Unterdruck im Filtergehäuse erzeugt, dadurch gekennzeichnet, dass ein modularer Aufbau des Gerätes dadurch erzielt ist, dass das Gebläse mit seinem Motor (12-16) in einem gesonderten, geschlossenen Gehäuse (2) angeordnet ist, welches ebenfalls von der Wand (19) und üder dem Boden (20) aufgestellt ist, und dass an die gegenüderliegende Seitenwand des Gebläsegehäuses (2) ein gleiches, jedoch spiegelbildlich ausgestaltetes, Filtergehäuse (1a) ansetzbar ist

2. Gerät nach Anspruch 1, dadurch gekennzeichnet, daß das Gehäuse (2) des Gebläses (1 2-16) ein unteres, geschlossenes Bodenblech (33) aufweist, das einen größeren Abstand zum Boden (20) aufweist, als ein parallel zum Boden (20) und dicht über dem Boden angeordnetes Leitblech (5) des Filtergehäuses (1,1a).

3. Gerät nach Anspruch 1 oder 2, dadurch gekennzeichnet, daß der Ventilator (13) als zweiseitig saugender Radial-Ventilator ausgebildet ist, dessen Achse drehfest mit einer Riemenscheibe (15) verbunden ist, über die ein Treibriemen (1 6) eines Motors (1 2) gelegt ist, dessen Motorgehäuse vollständig gekapselt ist.

4. Gerät nach Anspruch 3, dadurch gekennzeichnet, daß Ventilator (13) und Motor (1 2) untereinander angeordnet sind.

5. Gerät nach Anspruch 1, dadurc gekennzeichnet, daß das Gehäuse (2) des Gebläses um eine horizontale Achse (35), welche parallel zur Wand (1 9) verläuft, drehbar ist.

6. Gerät nach einem der Ansprüche 1 - 5, dadurch gekennzeichnet, daß auf dem teilweise geöffneten Bodenblech (32) des Filterteils (1) ein zickzackförmiges Filter (8) mit vertikal gerichteten Filterflächen (), 10) angeordnet ist.

7. Gerät nach einem der Ansprüche 1 - 6, dadurch gekennzeichnet, daß die die Ansaugöffnungen (17, 25, 26, 27) begrenzenden Kanten in Strömungsrichtung abgeschrägt sind.

8. Gerät nach einem der Ansprüche 1 - 7. dadurch gekennzeichnet, daß sich die Richtung der Filterflächen (9, 10) des V-förmigen Filters (8) in Richtung zur Ansaugöffnung (22) des Ventilators (13) im Filterteil (1) konisch verengen.

9. Gerät nach einem der Ansprüche 1 - 8, dadurch gekennzeichnet, daß im Filterteil (1) an der Ansaugöffnung (22) zum Ventilator (13) ein auswechselbarer Aktiv-Kohle-Filter anbringbar ist.

## Claims

1. Apparatus for the sucking off of colour mists and varnish dissolving vapours from paint-spraying appliances with a filter part (1) arranged in a filter housing, which is closed at the front, at the sides and on top and positioned with its rear wall, which is at least partially open, at a certain distance infront of a wall (19), and positioned with its floor surface (33), which is at least partially open, at a certain distance above the floor, and the air intake through the filter is done through the suction shaft formed between the rear wall of the filter housing and the wall (19), as well as through the suction shaft formed between the floor (2o) and the floor surface (33) of the filter housing, and the blower (12-16) effecting the air intake is arranged at a side wall outside of the filter housing and produces an underpressure in the filter housing via a groove interrupting the side wall, characterized in that a modular construction of the apparatus is obtained in that the blower with its motor (12-16) is arranged in a separate, closed housing (2), which is likewise installed away from the wall (19) and above the floor (20), and in that an identical but mirror-inverted filter housing (la) may be attached to the opposite side wall of the blower housing (2).

2. Apparatus according to claim 1, characterized in that housing (2) of the blower (12-16) has a lower, closed floor plate (33), which -is placed at a greater distance to the floor (20) than is a baffle plate (5) of the filter housing (1,1a) which is arranged parallel to the floor (20) and closely above it.

3. Apparatus according to claim 1 or 2, characterized in that blower (13) is arranged as radial blower, which is sucking on two sides, and whose axis is connected to a belt disc in such a way that it can not revolve, and a driving belt (16) of a motor (12) is placed on this belt disc, and the motor housing is completely enclosed.

4. Apparatus according to claim 3, characterized in that the blower (13) and the motor (12) are arranged underneath each other.

5. Apparatus according to claim 1, characterized in that the housing (2) of the blower is rotatable around a horizontal axis (35) which runs parallel to the wall (19).

6. Apparatus according to one of the claims 1-5, characterized in that a zigzag-type filter (8) with vertical filter faces (),1o) is arranged on the partially opened floor plate (32) of the filter part (1).

7. Apparatus according to one of the claims 1-6, characterized in that the edges bordering the intake openings (17,25,26,27) are chamfered in the direction of the flow.

8. Apparatus according to one of the claims 1-7, characterized in that the direction of the filter faces (9,1o) of the V-shaped filter (8) tapers in the direction to the suction opening (22) of the blower (13) in the filter part (1).

9. Apparatus according to one of the claims 1-8, characterized in that in the filter part (1) an exchangeable activated carbon filter may be attached to the suction opening (22) to the blower (13).

## Revendications

1. Appareil destiné à aspirer des brouillards de peinture et des vapeurs de laques hors d'installations de peinture au pistolet, cet appareil comprenant un élément filtrant (1) logé dans un boîtier de filtration, ce boîtier étant fermé à l'avant, sur le dessus et sur les côtés, tandis que sa paroi arrière, au moins en partie ouverte, est disposée à distance d'une paroi (19), et que sa surface inférieure (33), au moins en partie ouverte, est disposée à distance au-dessus du sol (20), l'aspiration d'air à travers le filtre s'effectuant par la cheminée d'aspiration formée entre la paroi arrière du boîtier de filtration et la paroi (19) et par la cheminée d'aspiration formée entre le sol (20) et la surface inférieure (33) du boîtier de filtration, le dispositif de ventilation (12-16) qui provoque l'aspiration d'air étant disposé à l'extérieur contre une paroi latérale du boîtier de filtration et produisant une dépression dans le boîtier de filtration par l'intermédiaire d'une découpe traversant la paroi latérale, caractérisé en ce qu'on réalise une structure modulaire de l'appareil par le fait que le dispositif de ventilation avec son moteur (12-16) est installé dans une enceinte fermée séparée (2) laquelle est également située à distance de la

**0 070 870**

paroi (19) et au-dessus du sol (20) et qu'un boîtier de filtration (1a) identique, mais de configuration énantiomorphe, peut être appliqué contre la paroi latérale opposée de l'enceinte (2) du dispositif de ventilation.

2. Appareil selon la revendication 1, caractérisé en ce que l'enceinte (2) du dispositif de ventilation (12-16) comporte un panneau de fond inférieur fermé (33) se trouvant à une distance plus grande du sol (20) qu'une tôle de guidage (5) du boîtier de filtration (1, 1a), parallèle au sol (20) et disposée juste au-dessus du sol.

3. Appareil selon la revendication 1 ou 2, caractérisé en ce que le ventilateur (13) est un ventilateur radial aspirant sur deux côtés et dont l'axe est solidaire en rotation d'une poulie (15) sur laquelle passe une courroie d'entraînement (16) d'un moteur (12) dont le carter est entièrement blindé.

4. Appareil selon la revendication 3, caractérisé en ce que le ventilateur (13) et le moteur (12) sont disposés l'un en-dessous de l'autre.

5. Appareil selon la revendication 1, caractérisé en ce que l'enceinte (2) du dispositif de ventilation peut pivoter autour d'un axe horizontal (35) parallèle à la paroi (19).

6. Appareil selon l'une quelqonque des revendications 1 à 5, caractérisé en ce qu'un filtre en zig-zag (8), ayant des surfaces filtrantes (9, 10) disposées verticalement, est positionné sur le panneau de fond (32), en partie ouvert, de l'élément filtrant (1).

7. Appareil selon l'une quelconque des revendications 1 à 6, caractérisé en ce que les arêtes définissant les orifices d'aspiration (17, 25, 26, 27) sont biseautées dans le sens d'écoulement.

8. Appareil selon l'une quelconque des revendications 1 à 7, caractérisé en ce que les surfaces filtrantes (9, 10) du filtre en V (8) convergent sous une forme conique vers l'orifice d'aspiration (22) du ventilateur (13) dans l'élément filtrant (1).

9. Appareil selon l'une quelconque des revendications 1 à 8, caractérisé en ce qu'un filtre à charbon actif interchangeable peut être monté dans l'élément filtrant (1) au niveau de l'orifice d'aspiration (22) conduisant au ventilateur (13).

6

FIG 1

0 070 870

7/4

FIG 2

314

FIG 3

FIG 4

FIG 5